(19) 

Europäisches Patentamt

European Patent Office

Office européen des brevets

(11) **EP 4 444 005 A1**

(12) **EUROPEAN PATENT APPLICATION**
published in accordance with Art. 153(4) EPC

(43) Date of publication:
**09.10.2024 Bulletin 2024/41**

(21) Application number: **22913536.3**

(22) Date of filing: **19.09.2022**

(51) International Patent Classification (IPC):
***H04W 72/04*** *(2023.01)*

(52) Cooperative Patent Classification (CPC):
**H04W 4/021; H04W 4/40; H04W 72/04;
H04W 76/14;** Y02D 30/70

(86) International application number:
**PCT/CN2022/119671**

(87) International publication number:
**WO 2023/124271 (06.07.2023 Gazette 2023/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.12.2021 CN 202111645242**

(71) Applicant: **ZTE Corporation
Shenzhen, Guangdong 518057 (CN)**

(72) Inventor: **JING, Xiaokang
Chengdu, Sichuan 610213 (CN)**

(74) Representative: **Canzler & Bergmeier
Patentanwälte
Partnerschaft mbB
Despag-Straße 6
85055 Ingolstadt (DE)**

(54) **RSU DEVICE CONTROL METHOD, SERVER AND STORAGE MEDIUM**

(57)     The present disclosure relates to the field of Internet of Vehicles, and provides a road side unit (RSU) device control method, a server and a storage medium. The method comprises: monitoring a state of a first RSU device; according to the state of the first RSU device, determining a second RSU device, a coverage range of which needs to be adjusted; and adjusting the coverage range of the second RSU device. The method is helpful for solving the problems that when an RSU device is in an offline state, an on-board unit (OBU) device is in a signal blind spot, and a request cannot be responded to in time; or that, when an RSU device is in a high-load state, the service quality has hidden dangers, ensuring communication stability between the RSU device and the OBU.

FIG. 1

## Description

CROSS REFERENCE TO RELATED APPLICATIONS

The present disclosure is based on and claims the priority to Chinese Patent Application No. CN202111645242.2 entitled "RSU DEVICE CONTROL METHOD, SERVER AND STORAGE MEDIUM" and filed on December 29, 2021, the contents of which are incorporated herein by reference in their entirety.

TECHNICAL FIELD

The present disclosure relates to the field of Vehicle-to-Everything, and in particular, to an RSU (Road Side Unit) device control method, a server, and a storage medium.

BACKGROUND

In recent years, there is rapid development in the field of Vehicle-to-Everything, and how to ensure stability of communication between an RSU device and an On Board Unit (OBU) is an important issue. The RSU device has a limited signal coverage range. When a larger coverage range is set, more OBU devices are allowed to be accessed in unit area, which correspondingly results in large power consumption and high load of the RSU device, and causes hidden dangers to quality of service; and when a smaller coverage range is set, a smaller number of OBU devices are allowed to be accessed in the unit area, so that the RSU device can provide more reliable services, but once the RSU device has a fault such as an off-line fault, a signal blind spot may appear along a whole road, and requests from the OBUs in such spot cannot be responded to in time, which may seriously influence the stability of the communication between the RSU device and the OBU devices.

SUMMARY

A major objective of the present disclosure is to provide an RSU device control method, a server, and a storage medium for at least solving the following problems: when the RSU device is in an off-line state, the OBU device is in a signal blind spot and a request from the OBU device cannot be responded to in time; and when the RSU device is in a high-load state, there are hidden dangers to quality of service, so as to ensure the stability of the communication between the RSU device and the OBU.

According to an exemplary embodiment of the present disclosure, there is provided an RSU device control method, including: monitoring a state of a first RSU device; according to the state of the first RSU device, determining a second RSU device which needs to be subjected to coverage range adjustment; and adjusting a coverage range of the second RSU device.

An embodiment of the present disclosure further provides a server, including a processor and a memory; and the processor is configured to execute one or more computer programs stored in the memory to implement operations of the RSU device control method described herein.

An embodiment of the present disclosure further provides a computer storage medium storing one or more computer programs executable by one or more processors to implement operations of the RSU device control method described herein.

Other features and corresponding beneficial effects of the present disclosure will be described in the following description, and it should be understood that at least part of the beneficial effects can become apparent from the description in the specification of the present disclosure.

BRIEF DESCRIPTION OF DRAWINGS

In order to illustrate the technical solutions of the present disclosure more clearly, drawings for the illustration of the embodiments will be briefly described below. Apparently, the drawings described below are merely for some embodiments of the present disclosure, and other drawings can be derived by those of ordinary skill in the art from the drawings described herein without any creative work.

FIG. 1 is a flowchart illustrating an RSU device control method according to an embodiment of the present disclosure;
FIG. 2 is a flowchart illustrating a method for determining a second RSU device which needs to be subjected to coverage range adjustment according to an embodiment of the present disclosure;
FIG. 3 is a flowchart illustrating another method for determining a second RSU device which needs to be subjected to coverage range adjustment according to an embodiment of the present disclosure;
FIG. 4 is a schematic diagram illustrating deployment of RSU devices according to an embodiment of the present disclosure;
FIG. 5 is a schematic diagram illustrating connection handover between an OBU and an RSU device according to an embodiment of the present disclosure;
FIG. 6 is a schematic diagram illustrating a mode of communication between an OBU and an RSU and a mode of communication between the RSU and a server in the Vehicle-to-Everything according to an embodiment of the present disclosure; and
FIG. 7 is a schematic structural diagram of an RSU device control apparatus according to an embodiment of the present disclosure.

DETAIL DESCRIPTION OF EMBODIMENTS

The embodiments of the present disclosure will be described in detail below, the examples of the embodiments are illustrated by the drawings, and the same or similar reference numerals refer to the same or similar elements or elements having the same or similar functions throughout the present disclosure. The embodiments described below with reference to the drawings are illustratively and merely used to explain the present disclosure, and should not be interpreted as limiting the present disclosure.

It should be understood by those of ordinary skill in the art that, unless expressly stated, "a", "one", and "the" used herein and indicating a singular form may indicate a plural form. It should be further understood that the term "comprise" used herein indicates the presence of the described features, integers, operations, elements and/or components, but does not exclude the presence or addition of one or more other features, integers, operations, elements, components and/or combinations thereof. It should be understood that when an element is "connected" or "coupled" to another element, the element may be connected or coupled to another element directly or through an intermediate element. Further, the term "connect" or "couple" used herein may include wireless connection or wireless coupling. The term "and/or" used herein includes all or any one of one or more of associated listed items, and all combinations of the one or more of associated listed items.

It should be understood by those of ordinary skill in the art that, unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the existing technology, and should not be interpreted in an idealized or overly formal sense unless expressly so defined herein.

It should be understood that the embodiments described herein are merely intended to explain the present disclosure, rather than limiting the present disclosure. The terms "first" and "second" are merely used to refer to the RSU devices and have no other meaning. The "first RSU device" and the "second RSU device" may refer to a same RSU device or different RSU devices.

In order to make the objectives, technical solutions and advantages of the present disclosure clearer, the embodiments of the present disclosure are described in detail below in conjunction with the drawings. It should be noted that the embodiments herein and the features therein can be combined with one another if no conflict is incurred

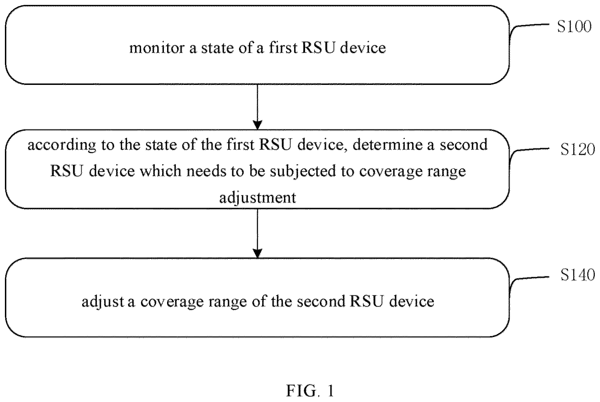

According to an embodiment of the present disclosure, there is provided an RSU device control method. As shown in FIG. 1, the method may include:

operation S 100, monitoring a state of a first RSU device.

In an exemplary implementation, monitoring the state of the first RSU device may include monitoring off-line time of the first RSU device or a current device access quantity of the first RSU device, so as to determine whether the state of the first RSU device is an off-line state or a high-load state.

In an exemplary implementation, various methods may be adopted to monitor whether the state of the first RSU device is the off-line state, and include, but are not limited to, monitoring the off-line time of the first RSU device, and marking the state of the first RSU device as the off-line state when the off-line time of the first RSU device exceeds a preset threshold, or when a device access quantity of the first RSU device is not read within a preset time range, or when a preset message is not received from the first RSU device within a preset time range, with the preset message including, but not limited to, a response message or a heartbeat message.

Furthermore, the device access quantity of the first RSU device is recorded when the off-line time of the first RSU device does not exceed the preset threshold, or when the device access quantity of the first RSU device is read within the preset time range, or when the preset message is received from the first RSU device within the preset time range, with the preset message including, but not limited to, the response message or the heartbeat message. In a case where the device access quantity of the first RSU device exceeds a preset threshold, the state of the first RSU device is marked as the high-load state.

It should be noted that the marking operation may be dynamically updated. Certainly, the marking operation is not necessarily an actual marking action, as long as the state of the first RSU device can be accurately monitored.

Moreover, in an exemplary implementation, monitoring the state of the first RSU device refers to monitoring a state of the first RSU device in which the first RSU device fails to provide an effective high-quality service in time, so as to achieve effective control of the first RSU device and/or other RSU devices to improve the quality of service of the RSU devices. Therefore, the state is not limited to the aforesaid off-line or high-load state, and may be any other applicable state in which high-quality services cannot be provided, such as a power-off state or a network disconnection state.

The RSU device control method further includes operation S120:

operation S 120, according to the state of the first RSU device, determining a second RSU device which needs to be subjected to coverage range adjustment.

In an exemplary implementation, the state of the first RSU device is obtained through accurate monitoring, and the second RSU device which needs to be subjected to coverage range adjustment is effectively and clearly determined based on the state of the RSU device, thereby achieving accurate and effective control, and ensuring that the RSU device can provide effective services with high reliability, stability and quality.

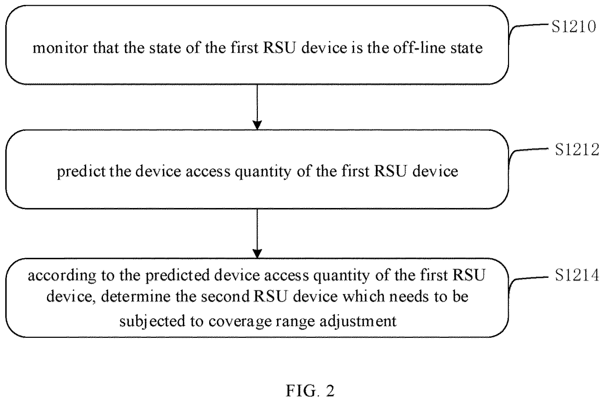

In an exemplary implementation, in a case where it is monitored that the state of the first RSU device is the off-line state, as shown in FIG. 2, determining the second RSU device which needs to be subjected to coverage range adjustment may include, but is not limited to, the following operations:

operation S1210, monitoring that the state of the first RSU device is the off-line state;
operation S1212, predicting the device access quantity of the first RSU device; and
operation S1214: according to the predicted device access quantity of the first RSU device, determining the second RSU device which needs to be subjected to coverage range adjustment.

In an exemplary implementation, in a case where the predicted device access quantity of the first RSU device is greater than a preset threshold, all other RSU devices except the first RSU device within a preset range are determined as the second RSU devices which need to be subjected to coverage range adjustment; or in a case where the predicted device access quantity of the first RSU device is less than the preset threshold, some other RSU devices except the first RSU device within the preset range are determined as the second RSU devices which need to be subjected to coverage range adjustment. The preset range may be set according to a location of the first RSU device or according to a certain region (a preset region where the first RSU device is located) that is convenient for unified management. That is, the preset range is not necessarily in a fixed or regular shape, and may be set according to actual situations.

It should be noted that predicting the device access quantity of the first RSU device may be performed according to historical access quantities of the first RSU device, and the historical access quantities may be counted according to seasons, peak hours, or other associated data. Certainly, predicting the device access quantity of the first RSU device may be also performed through dynamic intelligent prediction by a corresponding deep learning algorithm.

In an exemplary implementation, predicting the device access quantity of the first RSU device may be performed with the following method: reading the number of vehicles $M1_t$ within a coverage range corresponding to the first RSU device at a moment t in a normal state, an average value $M2_t$ of device access quantities of neighboring RSU devices with respect to the first RSU device at the moment t, and the device access quantity $M_t$ of the first RSU device at the moment t; calculating an average value $\overline{M}$ of device access quantities of the first RSU device based on $M_t$; calculating a first deviation degree of $M1_t$ relative to $\overline{M}$ and a second deviation degree of $M2_t$ relative to $\overline{M}$; and establishing a prediction equation using the first deviation degree and the second deviation degree to predict the device access quantity of the first RSU device.

For example, the method for predicting the device access quantity of the first RSU device may include the following operations.

Operation One: when the state of the first RSU device is the normal state, the following information is recorded at certain intervals, with the normal state referring to that the state of the first RSU device is neither the off-line state nor the high-load state.

(1) A statistical range is determined by taking the location of the first RSU device as a center and the coverage range of the first RSU device as a radius, and the number of all vehicles within the statistical range is counted according to location information of OBUs within the statistical range and is recorded as $M1_t$.

(2) The OBU device access quantities of the neighboring RSU devices with respect to the first RSU device are acquired and are averaged to obtain an average value, and the average value is recorded $M2_t$.

(3) The OBU device access quantity of the first RSU device is acquired and recorded as $M_t$.

Operation Two: when the state of the first RSU device is the off-line state, the recorded information is taken out. It is assumed that the historical records of n moments are recorded in total.

Operation Three: the prediction equation is established according to the recorded information for calculating a predicted value.

Firstly, an average value $\overline{M}$ of the data sequences generated at operation (3) by the first RSU device in the normal state is calculated.

Secondly, for M1 and M2 at a certain moment, both M1 and M2 may be taken as estimated values of M, and estimated deviation degrees of the two estimated values with respect to M are respectively calculated, that is, calculating a variance $\sigma_1{}^2$ of M1 relative to M and a variance $\sigma_2{}^2$ of M2 relative to M.

$$\sigma_1{}^2 = \frac{1}{n}\sum_{t=1}^{n}(M1_t - \overline{M})^2$$

$$\sigma_2{}^2 = \frac{1}{n}\sum_{t=1}^{n}(M2_t - \overline{M})^2$$

Finally, the OBU device access quantity of the first RSU device in the off-line state is predicated.

Since the data of M is missing in the off-line state, the OBU device access quantity of the first RSU device in the off-line state is predicted according to M1 and M2. For M1 and M2, different deviation situations are incurred, so that M1 and M2 take different weights during prediction, and the prediction equation established is as follows:

$$\hat{M} = M1 + K(M2 - M1)$$

The objective is to minimize a prediction error, i.e., minimizing the variance. Therefore, a following function is obtained through further derivation:

$$\sigma_{\hat{M}}^{2} = Var(\hat{M}) = Var(M1 + K(M2 - M1))$$
$$= Var(M1 - KM1 + KM2)$$
$$= Var((1-K)M1) + Var(KM2)$$
$$= (1-K)^2 Var(M1) + K^2 Var(M2)$$
$$= (1-K)^2 \sigma_1^2 + K^2 \sigma_2^2$$

Derivation of the function is performed with respect to K, so as to obtain the following relational expression merely related to the variances of the two variables M1 and M2:

$$\frac{d}{dK}\sigma_{\hat{M}}^2 = 2(K-1)\sigma_1^2 + 2K\sigma_2^2$$

An extreme point of the function is:

$$K = \frac{\sigma_1^2}{\sigma_1^2 + \sigma_2^2}$$

In summary, the predication relational expression is:

$$\hat{M} = M1 + \frac{\sigma_1^2}{\sigma_1^2 + \sigma_2^2}(M2 - M1)$$

The device access quantity of the first RSU device may be predicted by the prediction relational expression.

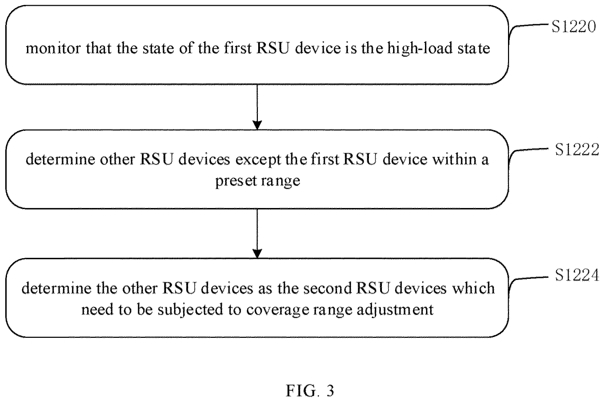

In another exemplary implementation, in a case where it is monitored that the state of the first RSU device is the high-load state, as shown in FIG. 3, determining the second RSU device which needs to be subjected to coverage range adjustment may include, but is not limited to, the following operations:

operation S1220, monitoring that the state of the first RSU device is the high-load state;
operation S1222, determining other RSU devices except the first RSU device within a preset range; and
operation S1224, determining the other RSU devices as the second RSU devices which need to be subjected to coverage range adjustment.

In an exemplary implementation, the other RSU devices except the first RSU device within the preset range may be some other RSU devices except the first RSU device within the preset range, or all other RSU devices except the first RSU device within the preset range.

In an exemplary implementation, determining the other RSU devices as the second RSU devices which need to be subjected to coverage range adjustment may be determining some other RSU devices except the first RSU device within the preset range as the second RSU devices which need to be subjected to coverage range adjustment, or determining all other RSU devices except the first RSU device within the preset range as the second RSU devices which need to be subjected to coverage range adjustment. Some other RSU devices except the first RSU device within the preset range refer to such devices within the preset range that, taking a location of the first RSU device as a center, distances from the devices to the location of the first RSU device meet a requirement of a preset distance threshold.

It should be noted that the preset range may be set according to the location of the first RSU device or according to a certain region (a preset region where the first RSU device is located) that is convenient for unified management. That is, the preset range is not necessarily in a fixed or regular shape, and may be set according to actual situations.

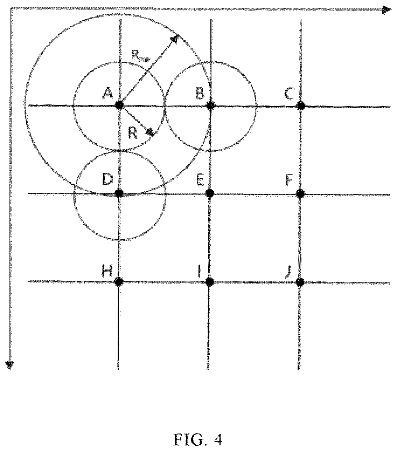

Furthermore, an illustrative description of the operation of determining, according to the state of the first RSU device, the second RSU device which needs to be subjected to coverage range adjustment is given with reference to FIG. 4.

What is illustrated by FIG. 4 is an example of a deployment scheme of RSU devices, and is also an example of the preset range in the embodiment of the present disclosure. It should be noted that a shape of an intersection shown in FIG. 4 is an ideal shape for convenience of illustration, and roads may be crooked in practical applications, but the roads can be easily and approximately embodied in the form described in the embodiment of the present disclosure. A central device E is the first RSU device, other devices A, B, C, D, F, G, H, I are the neighboring RSU devices, and the central device E and the devices A, B, C, D, F, G, H, I serve as all the RSU devices within the preset range as described in the embodiment of the present disclosure.

In an exemplary implementation, in a case where the state of the first RSU device is the off-line state and the predicted device access quantity of the first RSU device is greater than the preset threshold, all other RSU devices except the first RSU device within the preset range are determined as the second RSU devices which need to be subjected to coverage range adjustment. Exemplarily, as shown in FIG. 4, the central device E is taken as the first RSU device, and in a case where the state of the central device E is the off-line state and the predicted device access quantity of the central device E is greater than the preset threshold, all the other RSU devices except the central device E within the preset range are determined as the second RSU devices which need to be subjected to coverage range adjustment, that is, the devices A, B, C, D, F, G, H, I shown in FIG. 4 are determined as the second RSU devices which need to be subjected to coverage range adjustment.

In another exemplary implementation, in a case where the state of the first RSU device is the off-line state and the predicted device access quantity of the first RSU device is less than the preset threshold, some other RSU devices except the first RSU device within the preset range are determined as the second RSU devices which need to be subjected to coverage range adjustment. Some other RSU devices except the first RSU device within the preset range refer to such devices within the preset range that, taking the location of the first RSU device as the center, the distances from the devices to the location of the first RSU device meet the requirement of the preset distance threshold. As shown in FIG. 4, with the central device E taken as the first RSU device, in a case where the state of the central device E is the off-line state and the predicted device access quantity of the central device E is less than the preset threshold, some other RSU devices except the central device E within the preset range are determined as the second RSU devices which need to be subjected to coverage range adjustment, that is, taking the location of the central device E as a center, such devices within the preset range that the distances from the devices to the location of the central device E meet the requirement of the preset distance threshold are determined as some other RSU devices except the first RSU device within the preset range. The devices having the distances to the location of the central device E meeting the requirement of the preset distance threshold may be the devices B, D, F, I.

In another exemplary implementation, in a case where the state of the first RSU device is the high-load state, determining the second RSU device which needs to be subjected to coverage range adjustment may include: in the case where the state of the first RSU device is the high-load state, determining some other RSU device except the first RSU device within the preset range as the second RSU devices which need to be subjected to coverage range adjustment, with some other RSU devices except the first RSU device within the preset range referring to such devices within the preset range that, taking the location of the first RSU device as the center, the distances from the devices to the location of the first RSU device meet the requirement of the preset distance threshold. As shown in FIG. 4, with the central device E taken as the first RSU device, in a case where the state of the central device E is the high-load state, some other RSU devices except the central device E within the preset range are determined as the second RSU devices which need to be subjected to coverage range adjustment, that is, taking the location of the central device E as a center, such devices within the preset range that the distances from the devices to the location of the central device E meet the requirement of the preset distance threshold are determined as some other RSU devices except the first RSU device within the preset range. The devices having the distances to the location of the central device E meeting the requirement of the preset distance threshold may be the devices B, D, F, I.

The RSU device control method further includes operation S140:
operation S140, adjusting a coverage range of the second RSU device.

It should be noted that adjusting the coverage range of the second RSU device may be performed according to actual needs. For example, the coverage range of the second RSU device is adjusted to a maximum coverage range or increased to a certain proportion, or the coverage range of the first RSU device is reduced to a certain proportion.

In an exemplary implementation, with other conditions unchanged, a signal coverage range of an RSU device is related to transmission power. Before deploying the RSU devices, each RSU device used is measured in advance, a coverage range obtained in the presence of a highest power output is a maximum coverage range, and a coverage range corresponding to a preset proportion (for example, 80%) of maximum output power may be taken as a normal coverage range. Therefore, adjusting the coverage range may be implemented by adjusting the transmission power of the RSU device.

It should be noted that adjusting the coverage range of the second RSU device in a case where the first RSU device is in the off-line state may be performed for allowing the adjusted coverage range of the second RSU device to cover a part or all of the original coverage range of the first RSU device, so as to ensure that the RSU devices can provide high-quality services, and further reduce service blind spots. In an exemplary implementation, in the case where the first RSU device is in the off-line state, the coverage range of the second RSU device is typically increased by the adjustment. Certainly, the number of the adjusted second RSU device may be one or more than one; and the coverage range of each second RSU device may be adjusted by a same value or by a different value. For example, the coverage ranges of all the determined second RSU devices are adjusted to the maximum coverage ranges, or the coverage range of an RSU device having a distance to the first RSU device smaller than a first preset value is adjusted to the maximum coverage range and the coverage range of an RSU device having a distance to the first RSU device smaller than a second preset value is adjusted to a preset multiple of the original coverage range. That is, a final adjustment policy is to ensure that the second RSU devices can cover the coverage range of the first RSU device as much as possible and areas of overlapping regions between the second RSU devices are not larger than a preset area.

In an embodiment, in a case where the first RSU device is in the high-load state, adjusting the coverage range of the second RSU device may be performed for allowing the device access quantity of the first RSU device after the adjustment is within a preset normal value range, so as to enable loads of the first RSU device and the second RSU devices within the preset range to reach a balanced state. In such case, the second RSU devices determined may include the first RSU device.

Furthermore, in an exemplary implementation, the operation S 104 may further include reading a state of the second RSU device, and determining the second RSU device which is in a normal state as a target RSU device which needs to be subjected to coverage range adjustment; and adjusting a coverage range of the target RSU device which is in the normal state.

In an exemplary implementation, the second RSU device which is in the normal state may refer to the second RSU device which is not in the off-line state, or the high-load state, or other states in which it is inconvenient or impossible to adjust the coverage range (e.g., a disconnection state, a network disconnection state, and a state in which the device access quantity is greater than a preset value).

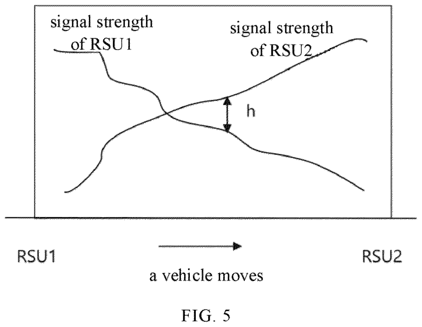

Furthermore, in an exemplary implementation, after the coverage range of the second RSU device is adjusted, a situation of duplicate coverage may occur. A connection handover criterion is a relative signal strength criterion with a hysteresis margin as shown in FIG. 5. When an OBU of a vehicle enters a duplicate signal coverage region of the RSU devices, instead of being directly connected to a new RSU device when a broadcast signal from the new RSU device is monitored, the OBU determines, based on a Received Signal Strength Indication (RSSI), signal strengths of all monitored broadcast signals from the RSU devices. When a signal strength of a new RSU device exceeds that of a currently connected RSU device by a preset range h, the OBU is connected to the new RSU device with the largest signal strength. Thus, frequent connection/disconnection between the OBU and the RSU devices caused by signal fluctuation can be prevented.

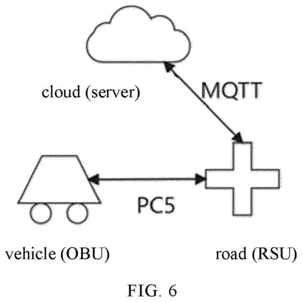

A policy similar to soft handover is adopted as a control policy, but the adopted soft handover is different from a handover mode involving base stations. The soft handover involving the base stations is a handover between different base stations at a same frequency, and a same data stream is transmitted in two links, thereby ensuring no interruption of communication. As shown in FIG. 6, the present disclosure relates to a part in vehicle-road collaboration in the Vehicle-to-Everything, and the adjustment to the coverage range of the RSU device relates to two communication modes in the Vehicle-to-Everything. One is a communication mode between the RSU device and a cloud platform: an online state of the RSU device is monitored by a cloud end using the Message Queuing Telemetry Transport (MQTT) protocol. The other is a communication mode between the RSU device and the OBU of the vehicle: a PC5 interface (a direct communication interface) is adopted between the OBU of the vehicle and the RSU device for direct communication.

The PC5 interface is adopted for the connection between the OBU and the RSU device, and the connection is direct connection between the OBU and the RSU device, with no need to use a base station as an intermediary. When the handover criterion is met, the OBU of the vehicle first uses a new channel to establish connection with the new RSU device and then interrupts the connection with the original RSU device, which avoids an influence of a no-connection period on the whole intelligent transportation communication, with the no-connection period appearing due to the connection being slow or the failed connection when the OBU of the vehicle establishes the new connection. It should be understood that the mode of the communication between the RSU device and the cloud platform (e.g., a server) and the mode of the communication between the OBU of the vehicle and the RSU device are not limited to the MQTT mode and the PC5 communication mode described above, and may adopt other communication modes as long as the communication between the RSU device and the cloud platform (e.g., a server) and the communication between the OBU of the vehicle and the RSU device can be achieved.

In an embodiment, there is provided an RSU device control apparatus, which may be run as software on an RSU device or in a server, or in any other suitable device of the Vehicle-to-Everything. The RSU device control apparatus may include a plurality of modules/units for implementing the above embodiments and implementations. The RSU device control apparatus may be one or more programs that are stored on a memory and executable by a processor to implement at least one operation of the RSU device control method according to the above embodiments. The term "module/unit" refers to a combination of software and/or hardware capable of performing a predetermined function.

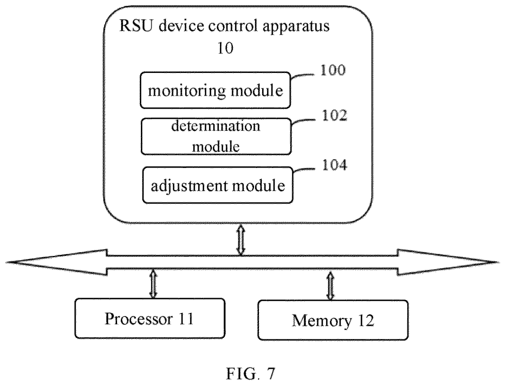

FIG. 7 is a schematic structural diagram of an RSU device control apparatus according to an embodiment of the present disclosure. An RSU device control apparatus 10 may operate in an RSU device. For example, the RSU device control apparatus 10 operates in a first RSU device to determine a second RSU device through monitoring of a state of the first RSU device, and communicate with the second RSU device in a corresponding communication mode to control coverage range adjustment; or the RSU device control apparatus 10 operates in a second RSU device to determine other second RSU devices which need to be subjected to coverage range adjustment through reading of a state of a neighboring first RSU device which is in communication connection (wireless or wired connection) with the second RSU device, and communicate with the first RSU device or the other second RSU devices in a corresponding communication mode to control coverage range adjustment.

The RSU device control apparatus may operate in a server, and monitors, with a monitoring module 100, the state of the first RSU device and/or a state of a second RSU device. The RSU device control apparatus further includes a determination module 102 configured to determine a second RSU device or a target RSU device which needs to be subjected to coverage range adjustment, and an adjustment module 104 configured to adjust a coverage range of the second RSU device or the target RSU device.

The structure shown in FIG. 7 is merely for illustration and is not intended to limit the structure of the RSU device control apparatus 10. For example, the RSU device control apparatus 10 may include more or fewer components than those shown in FIG. 7, or may be configured in a way different from that shown in FIG. 7.

In an embodiment, the RSU device control apparatus 10 further includes a processor 11 (one or more processors 11 may be provided, and merely one processor 11 is shown), and a memory 12 (one or more memories 12 may be provided, and merely one memory 12 is shown). The processor 11 and the memory 12 may be connected to and communicate with each other via a universal bus (not marked by a reference numeral).

The processor 11 may include, but is not limited to, a processing device such as a microprocessor (e.g., a microcontroller unit (MCU)) or a programmable logic device (e.g., a field programmable gate array (FPGA)). The memory 12 may be configured to store computer programs, such as software programs and modules of application software. For example, the memory 12 may be configured to store a computer program corresponding to the service configuration management method provided in the embodiments of the present disclosure. By running the computer programs stored in the memory 12, the processor 11 performs various functional applications and data processing, that is, implementing the above method. The memory 12 may include a high-speed random access memory, and may also include a non-volatile memory, such as one or more magnetic storage devices, flash memories, or other non-volatile solid-state memories. In some examples, the memory 12 may further include a memory remotely arranged relative to the processor 11, and the remote memory may be connected to the apparatus 10 via a network. The examples of the network include, but are not limited to, the Internet, an intranet, a local area network, a mobile communication network, the combinations thereof, and any type of suitable network.

According to another embodiment of the present disclosure, there is provided a computer-readable storage medium, which may be configured to store one or more computer programs, and the stored one or more computer programs are executable by a processor to implement at least one operation of the RSU device control method according to the above embodiments.

According to still another embodiment of the present disclosure, there is provided a server, including a processor configured to run a program, and a memory. The program implements the aforesaid method when being run, or the operations of the aforesaid method are performed when the program is run.

An embodiment of the present disclosure further provides a computer program product (a computer program or software), including a computer-readable device having the above computer program stored therein. In this embodiment, the computer-readable device may include the above computer-readable storage medium. The computer program product may be distributed on a computer-readable medium and executable by a computing device to implement at least one operation of the RSU device control method according to the above embodiments.

The RSU device control method provided in the embodiments of the present disclosure solves the following problems: when the RSU device is in the off-line state, the OBU device is in a signal blind spot and a request from the OBU device cannot be responded to in time; and when the RSU device is in the high-load state, there are hidden dangers to quality of service. Thus, the RSU device control method can ensure the stability of the communication between the RSU device and the OBU.

It should be understood by those of ordinary skill in the art that the present disclosure includes and relates to devices for performing one or more operations described in the present disclosure. Those devices may be specially designed and manufactured for desired purposes, or may include known devices in general purpose computers. Those devices have computer programs stored therein, and the computer programs are selectively activated or reconfigured. Those computer programs may be stored in a device (e.g., a computer) readable medium or in any type of medium suitable to store electronic instructions and respectively coupled to buses. The computer readable medium includes, but is not limited to, any type of disk (including a floppy disk, a hard disk, an optical disc, a Compact Disc Read-Only Memory (CD-ROM), and a magneto-optical disk), a Read-Only Memory (ROM), a Random Access Memory (RAM), an Erasable Programmable Read-Only Memory (EPROM), an Electrically Erasable Programmable Read-Only Memory (EEPROM), a flash memory, a magnetic card or a light card. That is, the readable medium includes any medium that stores or transmits information in a form readable by a device (e.g., a computer).

Apparently, it should be understood by those of ordinary skill in the art that the functional modules/units in all or some of the operations, the systems and the devices in the methods disclosed above may be implemented as software (which may be implemented as computer program codes executable by a computing device), firmware, hardware, or suitable combinations thereof. If implemented as hardware, the division between the functional modules/units described above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit.

It should be understood by those of ordinary skill in the art that each block of the structural diagrams and/or block diagrams and/or flowcharts and combinations of the blocks of the structural diagrams and/or block diagrams and/or flowcharts can be implemented by computer program instructions. It should be understood by those of ordinary skill in the art that the computer program instructions may be provided for a general purpose computer, a special purpose computer, or a processor for other programmable data processing methods, so as to implement the solutions specified in one or more blocks of the structural diagrams and/or block diagrams and/or flowcharts with the computers or the processor for the other programmable data processing methods.

It should be understood by those of ordinary skill in the art that the operations, measures and solutions in various operations, methods and flows discussed herein can be alternated, modified, combined or deleted. Moreover, other operations, measures and solutions having the various operations, methods and flows discussed herein can be alternated, modified, rearranged, decomposed, combined or deleted as well.

Furthermore, the operations, measures and solutions in the prior art the same as those in the various operations, methods and flows discussed herein can be alternated, modified, rearranged, decomposed, combined or deleted as well.

The above description is merely for some implementations of the present disclosure. It should be noted that various improvements and modifications can be made by those of ordinary skill in the art without departing from the principle of the present disclosure, and those improvements and modifications should be considered to fall within the scope of the present disclosure.

**Claims**

1. A Road Side Unit (RSU) device control method, comprising:

   monitoring a state of a first RSU device;
   according to the state of the first RSU device, determining a second RSU device which needs to be subjected to coverage range adjustment; and
   adjusting a coverage range of the second RSU device.

2. The method of claim 1, wherein monitoring the state of the first RSU device comprises: monitoring off-line time of the first RSU device or a current device access quantity of the first RSU device, so as to determine whether the state of the first RSU device is an off-line state or a high-load state.

3. The method of claim 2, wherein monitoring the off-line time of the first RSU device or the current device access quantity of the first RSU device so as to determine whether the state of the first RSU device is the off-line state or the high-load state comprises:

   in a case where it is monitored that the off-line time of the first RSU device exceeds a preset time threshold, marking the state of the first RSU device as the off-line state, so as to determine that the state of the first RSU device is the off-line state; or
   in a case where it is monitored that the current device access quantity of the first RSU device exceeds a preset load threshold, marking the state of the first RSU device as the high-load state, so as to determine that the state of the first RSU device is the high-load state.

4. The method of claim 2, wherein in a case where it is determined that the state of the first RSU device is the off-line state, determining, according to the state of the first RSU device, the second RSU device which needs to be subjected to coverage range adjustment comprises:

   predicting a device access quantity of the first RSU device;
   in a case where the predicted device access quantity of the first RSU device is greater than a preset threshold, determining all other RSU devices except the first RSU device within a preset range as second RSU devices which need to be subjected to coverage range adjustment; or
   in a case where the predicted device access quantity of the first RSU device is less than the preset threshold, determining some other RSU devices except the first RSU device within a preset range as second RSU devices which need to be subjected to coverage range adjustment.

5. The method of claim 4, wherein predicting the device access quantity of the first RSU device comprises:

   reading a number of vehicles $M1_t$ within a coverage range corresponding to the first RSU device at a moment t in a normal state, an average value $M2_t$ of device access quantities of neighboring RSU devices with respect to the first RSU device at the moment t, and a device access quantity $M_t$ of the first RSU device at the moment t;
   calculating an average value $\overline{M}$ of device access quantities of the first RSU device based on $M_t$;
calculating a first deviation degree of $M1_t$ relative to $\overline{M}$ and a second deviation degree of $M2_t$ relative to $\overline{M}$ ; and
establishing a prediction equation using the first deviation degree and the second deviation degree to predict the device access quantity of the first RSU device.

6. The method of claim 2, wherein in a case where it is determined that the state of the first RSU device is the high-load state, determining, according to the state of the first RSU device, the second RSU device which needs to be subjected to coverage range adjustment comprises:
determining some other RSU devices except the first RSU device within a preset range as second RSU devices which need to be subjected to coverage range adjustment.

7. The method of claim 4 or 6, wherein determining some other RSU devices except the first RSU device within the preset range as the second RSU devices which need to be subjected to coverage range adjustment further comprises:
taking a location of the first RSU device as a center, determining such devices within the preset range that distances from the devices to the location of the first RSU device meet a requirement of a preset distance threshold as some other RSU devices except the first RSU device within the preset range.

8. The method of claim 1, wherein adjusting the coverage range of the second RSU device comprises:

reading a state of the second RSU device;
determining the second RSU device which is in a normal state as a target RSU device which needs to be subjected to coverage range adjustment; and
adjusting a coverage range of the target RSU device which is in the normal state.

9. A server, comprising a processor and a memory; wherein the processor is configured to execute one or more computer programs stored in the memory to implement operations of the RSU device control method of any one of claims 1 to 8.

10. A computer-readable storage medium storing one or more computer programs executable by one or more processors to implement operations of the RSU device control method of any one of claims 1 to 8.

monitor a state of a first RSU device — S100

according to the state of the first RSU device, determine a second RSU device which needs to be subjected to coverage range adjustment — S120

adjust a coverage range of the second RSU device — S140

FIG. 1

monitor that the state of the first RSU device is the off-line state — S1210

↓

predict the device access quantity of the first RSU device — S1212

↓

according to the predicted device access quantity of the first RSU device, determine the second RSU device which needs to be subjected to coverage range adjustment — S1214

FIG. 2

monitor that the state of the first RSU device is the high-load state ⌐ S1220

determine other RSU devices except the first RSU device within a preset range ⌐ S1222

determine the other RSU devices as the second RSU devices which need to be subjected to coverage range adjustment ⌐ S1224

FIG. 3

FIG. 4

FIG. 5

cloud (server)    MQTT

PC5

vehicle (OBU)                road (RSU)

FIG. 6

RSU device control apparatus
10

monitoring module ___ 100

determination module ___ 102

adjustment module ___ 104

Processor 11

Memory 12

FIG. 7

## INTERNATIONAL SEARCH REPORT

International application No.

**PCT/CN2022/119671**

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI; EPODOC; CNKI; CNPAT; 3GPP: V2x, RSU, 车联网, 路侧单元, 负载, 负荷, 均衡, 拥塞, 卸载, 覆盖, 范围, 功率, 邻, vehicle, load, balance, congest, coverage, power, neighbor

### C. DOCUMENTS CONSIDERED TO BE RELEVANT

| Category* | Citation of document, with indication, where appropriate, of the relevant passages | Relevant to claim No. |
|---|---|---|
| Y | CN 107409402 A (NOKIA SOLUTIONS AND NETWORKS OY) 28 November 2017 (2017-11-28) description, paragraphs 162-209 | 1-10 |
| Y | CN 109219060 A (DATANG MOBILE COMMUNICATIONS EQUIPMENT CO., LTD.) 15 January 2019 (2019-01-15) description, paragraphs 136-177 | 1-10 |
| A | SAMSUNG. "Discussion on congestion control" *3GPP TSG RAN WG1 #87 R1-1612392,* 18 November 2016 (2016-11-18), entire document | 1-10 |
| A | CN 110299954 A (FORD GLOBAL TECHNOLOGIES, L.L.C.) 01 October 2019 (2019-10-01) entire document | 1-10 |
| A | CN 109803313 A (CHINA ACADEMY OF TELECOMMUNICATIONS TECHNOLOGY) 24 May 2019 (2019-05-24) entire document | 1-10 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 November 2022** | **25 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/119671** |

**C.** **DOCUMENTS CONSIDERED TO BE RELEVANT**

| Category* | Citation of document, with indication, where appropriate, of the relevant passages | Relevant to claim No. |
|---|---|---|
| A | WO 2020261908 A1 (PANASONIC INTELLECTUAL PROPERTY MANAGEMENT CO., LTD.) 30 December 2020 (2020-12-30)<br>entire document | 1-10 |

## INTERNATIONAL SEARCH REPORT
### Information on patent family members

International application No.

**PCT/CN2022/119671**

| Patent document cited in search report | | | Publication date (day/month/year) | Patent family member(s) | | | Publication date (day/month/year) |
|---|---|---|---|---|---|---|---|
| CN | 107409402 | A | 28 November 2017 | EP | 3269186 | A1 | 17 January 2018 |
| | | | | WO | 2016141980 | A1 | 15 September 2016 |
| | | | | US | 2018049104 | A1 | 15 February 2018 |
| | | | | ES | 2870398 | T3 | 27 October 2021 |
| CN | 109219060 | A | 15 January 2019 | None | | | |
| CN | 110299954 | A | 01 October 2019 | DE | 102019106881 | A1 | 26 September 2019 |
| | | | | US | 2019297526 | A1 | 26 September 2019 |
| CN | 109803313 | A | 24 May 2019 | TW | 201924381 | A | 16 June 2019 |
| | | | | WO | 2019095805 | A1 | 23 May 2019 |
| WO | 2020261908 | A1 | 30 December 2020 | CN | 114026890 | A | 08 February 2022 |
| | | | | JP | 2021005801 | A | 14 January 2021 |

Form PCT/ISA/210 (patent family annex) (January 2015)

**REFERENCES CITED IN THE DESCRIPTION**

**Patent documents cited in the description**

- CN 202111645242